# FASCICULE DE BREVET EUROPEEN

(11) **EP 2 969 708 B1**
(45) Date de publication et mention de la délivrance du brevet: **08.02.2017**
(21) Numéro de dépôt: 13808048.6
(22) Date de dépôt: 18.12.2013
(51) Int. Cl.: B62D 9/02, B62D 24/00

(54) **DISPOSITIF POUR CONTROLER L'INCLINAISON PAR VOIE PUREMENT MECANIQUE D'UN VEHICULE INCLINABLE A AU MOINS TROIS ROUES**
REIN MECHANISCHE VORRICHTUNG ZUM ÜBERWACHEN DER NEIGUNG EINES NEIGEFAHRZEUGS MIT MINDESTENS DREI RÄDERN
PURELY MECHANICAL DEVICE FOR CONTROLLING THE INCLINATION OF A TILTING VEHICLE HAVING AT LEAST THREE WHEELS

(30) Priorité: 13.03.2013 FR 1300555
(43) Date de publication de la demande: 20.01.2016
(73) Titulaire: Marie-Francoise, David, 92110 Clichy (FR); Lehongre, Claude, 75017 Paris (FR)
(72) Inventeur: Marie-Francoise, David, 92110 Clichy (FR); Lehongre, Claude, 75017 Paris (FR)
(74) Mandataire: Cabinet Camus Lebkiri
(86) Numéro de dépôt international: PCT/EP2013/077196
(87) Numéro de publication internationale: WO 2014/041210

(56) Documents cités:
- FR-A1- 2 946 944

## Description

La présente invention concerne un dispositif d'inclinaison purement mécanique, pour un véhicule motorisé étroit à au moins trois roues de manière à assurer son équilibre quelle que soit sa vitesse.

L'équilibre des véhicules inclinables est traditionnellement assuré, soit par le conducteur qui pilote son véhicule à la manière d'un deux roues, soit par un système complexe de régulation qui fait appel à des mesures d'accélérations, gyroscopes ou autre et agit sur l'inclinaison via un système de vérin ou tout autre actionneur tel que décrits dans les brevets WO2005/075278, WO9534459 ou US6435522.

Dans le premier cas, la conduite du véhicule s'apparente au pilotage d'une moto, ouvert à une frange réduite de conducteurs. Dans l'autre cas, le coût du système est prohibitif d'autant plus que les contraintes de sécurité peuvent conduire à doubler voire tripler les commandes.

Une solution à cette difficulté est décrite dans le brevet FR2946944 mais le système proposé conduit à des efforts de direction très élevés difficilement acceptables sans assistance de direction, et la présence d'une assistance ramène au problème de coût précédent.

Ce document FR couvre les caractéristiques du préambule de la revendication 1.

L'invention décrite ci après a pour but de résoudre cette difficulté avec un système purement mécanique.

Selon une première caractéristique il comporte une nacelle suspendue à un axe longitudinal, axe placé au dessus du centre de gravité de la nacelle.

Selon une deuxième caractéristique il comporte deux demi châssis latéraux, articulés sur la nacelle par cet axe longitudinal de telle manière qu'ils puissent s'écarter ou se rapprocher de la nacelle et qui portent chacun une des roues directrices avant du véhicule dans le cas d'un tricycle, et une des roues directrices avant et une des roues arrières dans le cas d'un quadricycle.

Selon une troisième caractéristique un système mécanique relie l'angle d'écartement que font les deux demi châssis avec la nacelle, de telle manière qu'un rapprochement limité d'un des demi châssis et de la nacelle conduise à un écartement important de l'autre demi châssis et de la nacelle.

Selon une quatrième caractéristique les pivots des roues directrices forment un angle faible avec le demi-châssis qui les portent de telle manière que les axes de pivot droit et gauche se croisent à faible distance au-dessus de l'axe longitudinal.

Selon une cinquième caractéristique, la chasse des roues avant directrices est telle qu'en cas d'absence d'effort de direction, les roues se placent d'elles même en position d'équilibre.

Selon une sixième caractéristique un système mécanique lié à la nacelle et au système de direction influe sur le pincement des roues directrices, de telle manière qu'une inclinaison excessive de la nacelle par rapport à sa position d'équilibre conduise à un pincement et inversement qu'une inclinaison insuffisante conduise à une ouverture des roues directrices.

Selon une septième caractéristique, il comporte un système mécanique de direction qui a pour fonction de braquer la roue intérieure au virage de manière plus forte que celle extérieure au virage.

L'invention porte sur le fait qu'en ligne droite, sur sol horizontal, la nacelle est suspendue à son axe longitudinal, en équilibre, l'axe longitudinal étant porté par les deux demi châssis latéraux formant de part et d'autre de la nacelle un angle égal.

Dans cette configuration, les roues directrices sont dans l'axe de marche, le dispositif qui génère un pincement ou une ouverture des roues directrices n'agissant pas du fait de l'équilibre de la nacelle. L'ensemble reste stable, sans s'incliner d'un coté ou de l'autre.

Depuis cette position, si le conducteur braque son volant à droite, la direction va faire braquer la roue directrice de droite vers la droite de manière plus forte que la roue gauche.

La roue directrice droite, en braquant plus franchement que la roue gauche vers la droite va écarter le demi-châssis de droite vers la droite.

Les deux demi-châssis vont donc avoir tendance à s'écarter comme lorsqu'on écarte les bras d'un compas.

La nacelle étant suspendue par son axe porteur va avoir tendance sous la force centrifuge du virage à s'incliner vers l'intérieur du virage, étant aidée en cela par le dispositif qui fixe les angles relatifs entre la nacelle et les demi châssis.

Si l'inclinaison de la nacelle générée par ce dispositif est inférieur à l'angle que la nacelle devrait avoir sous l'effet de la force centrifuge du virage en cours, le dispositif mentionné dans la sixième caractéristique va avoir tendance à ouvrir les deux roues directrices avant, accentuant encore l'écartement des deux demi châssis, augmentant l'inclinaison de la nacelle jusqu'à atteindre la position d'équilibre.

En revanche, si l'inclinaison de la nacelle obtenue mécaniquement par le dispositif qui fixe les angles relatifs de la nacelle et des deux demi châssis est plus fort que celui que la nacelle devrait avoir sous l'effet de la force centrifuge généré par le virage, le dispositif mentionné dans la sixième caractéristique va tendre à créer un pincement entre les deux roues directrices et faire se rapprocher les deux demi châssis, conduisant à un redressement de la nacelle jusqu'à trouver la position d'équilibre.

De manière symétrique à l'entrée en virage, la sortie de virage se fait en débraquant. La roue intérieure au virage en se redressant plus que la roue extérieure grâce à la géométrie du système de direction va conduire à rapprocher les deux demi châssis et à redresser la nacelle.

Les dessins annexés illustrent l'invention.

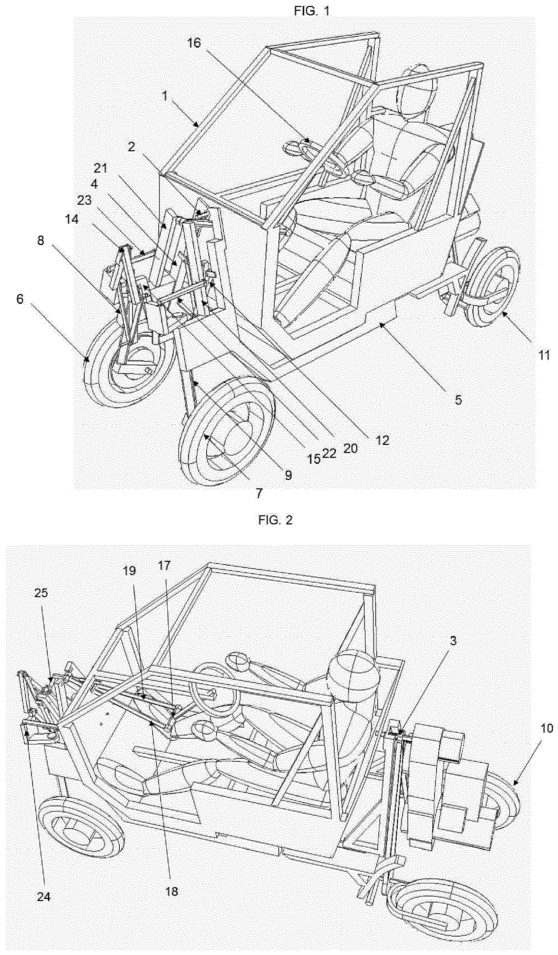

Les figures 1 à 5 représentent une réalisation de l'invention sous forme de quadricycle, ainsi que certains détails de réalisation.

En référence aux figures 1 à 5, le système comporte une nacelle (1) suspendue à un axe longitudinal placé au dessus du centre de gravité de la nacelle (1), axe matérialisé par deux pivots (2) et (3).

Les deux pivots (2) et (3) sont portés par deux demi châssis (4) et (5).

Chacun des demi-châssis (4) et (5) portent les roues avant directrices (6) et (7), via des pivots de direction (8) et (9) dont l'angle de pivot est faible par rapport au demi-châssis (4) et (5) qui les portent de telle manière que les axes de pivot droit et gauche se croisent à faible distance au-dessus de l'axe longitudinal.

Dans l'exemple de cette réalisation, chaque demi-châssis porte également les roues arrière (10) et (11).

Deux dispositifs de barres articulées (12) et (13), l'un à l'avant de la nacelle et l'autre à l'arrière, permettent de relier l'angle d'écartement que font les deux demi châssis (4) et (5) avec la nacelle (1). Ces dispositifs (12) et (13) sont réalisés de telle manière qu'une réduction limitée de l'angle entre châssis et nacelle d'un coté conduise à une augmentation importante de l'angle de l'autre coté et vis et versa.

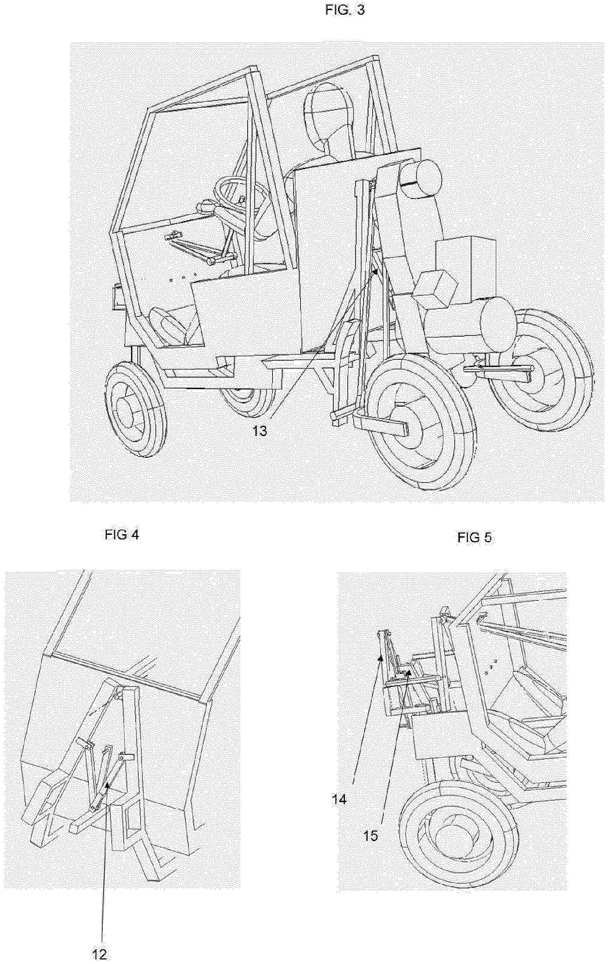

La figure 4 indique un mode de réalisation du système (12). Le système (13) non détaillé peut être identique.

Un troisième système de barres articulées (14), semblable aux dispositifs (12) et (13), relié d'une part au système de direction des roues avant (6) et (7) et d'autre part à une potence pivotante centrale à axe vertical (15) reliée à la nacelle, a pour vocation d'induire un pincement ou une ouverture des roues directrices selon que la nacelle est excessivement inclinée par rapport à sa position d'équilibre ou insuffisamment inclinée.

La figure 5 indique un mode de réalisation des systèmes (14) et (15).

Un système de direction composé d'un volant (16) et d'une barre (17) actionne deux biellettes (18) et (19) qui font basculer deux barres de renvoi (20) et (21), actionnant eux même deux barres de directions (22) et (23).

Les biellettes (18) et (19) sont articulées sur les barres de renvois (20) et (21) au plus près de l'axe de pivot (2) et (3) pour que le débattement des demi-châssis (4) et (5) ait le minimum d'influence sur la commande de braquage.

Les deux barres de direction (22) et (23) attaquent respectivement des manivelles (24) et (25), solidaires des pivots (8) et (9) et conduisent au braquage des roues (6) et (7).

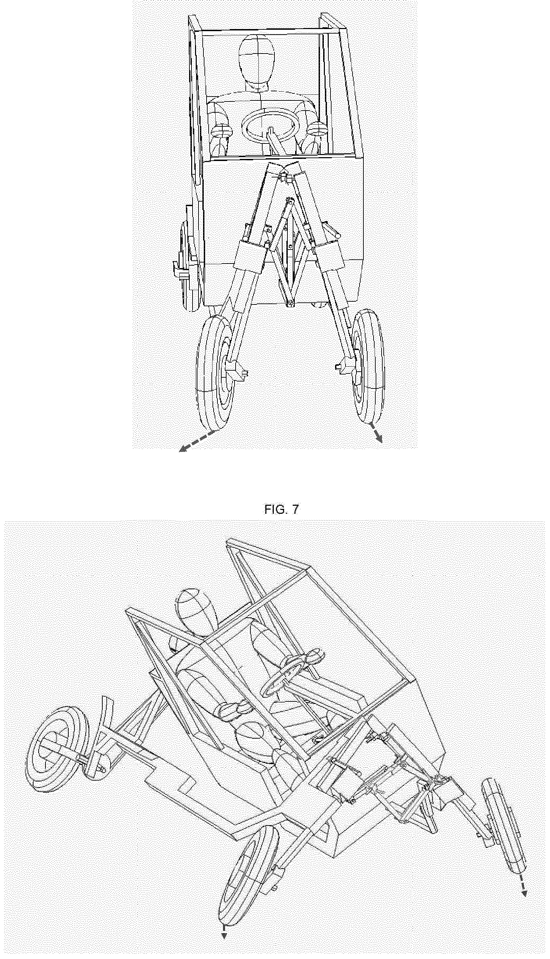

La figure 6 présente une entrée en virage à droite du véhicule où l'on voit que la roue avant droite braque plus que la roue avant gauche ce qui va conduire, lorsque le véhicule avance à écarter des deux demi châssis gauche et droite et à l'incliner la nacelle.

La figure 7 présente la position en régime établit en virage, où la nacelle est en équilibre entre la force de gravité et la force centrifuge.

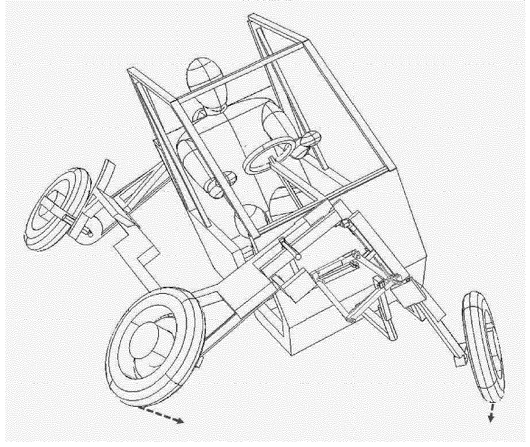

La figure 8 présente une sortie de virage où les roues intérieure et extérieure présentent un pincement important, conduisant à resserrer les deux demi châssis et à redresser la nacelle.

## Revendications

1. Dispositif pour contrôler l'inclinaison par voie purement mécanique d'un véhicule inclinable étroit à au moins trois roues de manière à assurer son équilibre quelle que soit sa vitesse **caractérisé en ce qu'**il comporte deux demi châssis, un demi châssis à droite (4) et un demi châssis à gauche (5) qui sont articulés entre eux par un axe longitudinal matérialisé par deux pivots (2) et (3).

2. Dispositif selon la revendication 1 **caractérisé en ce que** les pivots (2) et (3) portent également une nacelle (1) en un axe situé au-dessus du centre de gravité de ladite nacelle (1).

3. Dispositif selon les revendications 1 et 2 **caractérisé en ce que** les demi châssis (4) et (5) portent les roues avant directrices droite (6) et gauche (7) via des pivots de direction (8) et (9), pivots (8) et (9) formant un angle de pivot faible par rapport aux deux demi châssis (4) et (5) de telle manière que les axes de pivot droit et gauche se croisent à faible distance au-dessus de l'axe longitudinal matérialisé par les pivots (2) et (3).

4. Dispositif selon les revendications 1 à 3 **caractérisé en ce qu'**un système mécanique (12) situé à l'avant de la nacelle permet de relier l'angle d'écartement que font les deux demi châssis (4) et (5) avec la nacelle (1), le système (12) étant réalisé de telle manière qu'une réduction limitée de l'angle entre un demi châssis et la nacelle d'un coté conduise à une augmentation importante de l'angle entre l'autre demi châssis et la nacelle de l'autre coté et vis et versa.

5. Dispositif selon l'une quelconque des revendications précédentes **caractérisé en ce que** les demi châssis (4) et (5) portent chacun une roue arrière (10) et (11) dans le cas d'un quadricycle et que les deux demi châssis (4) et (5) présentent une certaine souplesse en torsion, leur permettant d'adopter un angle par rapport à la nacelle (1) différent entre l'avant et l'arrière du demi châssis concerné.

6. Dispositif selon l'une quelconque des revendications précédentes **caractérisé en ce qu'**un deuxième système mécanique (13) semblable au système (12) mais situé à l'arrière de la nacelle remplit dans le cas d'un quadricycle le même rôle pour la partie arrière des deux demi châssis (4) et (5) que le système (12).

7. Dispositif selon l'une quelconque des revendications précédentes **caractérisé en ce qu'**un autre système mécanique (14), semblable au système (12) mais relié d'une part au système de direction des roues avant (6) et (7) et d'autre part par une potence pivotante centrale à axe vertical (15) relié à la nacelle (1), potence (15) dont la vocation est de se déplacer en fonction de l'équilibre de la nacelle, a pour rôle d'induire un pincement ou une ouverture des roues directrices selon que la nacelle est excessivement inclinée par rapport à sa position d'équilibre ou insuffisamment inclinée.

8. Dispositif selon l'une quelconque des revendications précédentes **caractérisé en ce que** un système de direction composé d'un volant (16) et d'une barre de commande (17) liée en rotation avec le volant mais laissée libre de débattre longitudinalement pour permettre aux roues avant (6) et (7) de se pincer ou de s'ouvrir actionne deux biellettes (18) et (19) qui font basculer deux renvois d'angle (20) et (21), actionnant eux même deux barres de directions (22) et (23), attaquent respectivement des manivelles (24) et (25), solidaires des pivots de direction (8) et (9) et conduisent au braquage des roues (6) et (7), système de direction dont la géométrie globale et les équilibres de forces font que la roue intérieure braque plus que la roue extérieure.

9. Dispositif selon l'une quelconque des revendications précédentes **caractérisé en ce que** les biellettes de direction (18) et (19) sont articulées sur les barres de renvoi (20) et (21) au plus près de l'axe formé par les pivots (2) et (3) pour que le débattement des demi châssis (4) et (5) influence au minimum la commande de braquage.

## Patentansprüche

1. Vorrichtung zur Kontrolle der Neigung eines engen, neigbaren Fahrzeugs auf mindestens drei Rädern auf rein mechanischem Weg derart, dass sein Gleichgewicht unabhängig von seiner Geschwindigkeit gewährleistet wird, **dadurch gekennzeichnet, dass** es zwei halbe Fahrgestelle, ein halbes rechtes Fahrgestell (4) und ein halbes linkes Fahrgestell (5) umfasst, die untereinander durch eine Längsachse artikuliert sind, die durch zwei Angelpunkte (2) und (3) realisiert ist.

2. Vorrichtung gemäß Anspruch 1, **dadurch gekennzeichnet, dass** die Angelpunkte (2) und (3) ebenfalls eine Kabine (1) in einer sich oberhalb dem Schwerpunkt der genannten Kabine (1) befindenden Achse tragen.

3. Vorrichtung gemäß Anspruch 1 und 2, **dadurch gekennzeichnet, dass** die halben Fahrgestelle (4) und (5) das vordere rechte (6) und linke (7) gelenkte Rad über Lenkangelpunkte (8) und (9) tragen, wobei die Angelpunkte (8) und (9) einen im Verhältnis zu den zwei halben Fahrgestellen (4) und (5) geringen Schwenkwinkel derart bilden, dass die rechte und linke Schwenkachse sich in geringer Entfernung oberhalb der Längsachse kreuzen, die durch die Angelpunkte (2) und (3) realisiert ist.

4. Vorrichtung gemäß Anspruch 1 bis 3, **dadurch gekennzeichnet, dass** ein mechanisches System (12), das sich vorne an der Kabine befindet, die Verbindung des Beabstandungswinkels, die die zwei halben Fahrgestelle (4) und (5) bilden, mit der Kabine (1) zulässt, wobei das System (12) derart realisiert ist, dass eine begrenzte Reduzierung des Winkels zwischen einem halben Fahrgestell und der Kabine auf einer Seite zu einer erheblichen Erhöhung des Winkels zwischen dem anderen halben Fahrgestell und der Kabine auf der anderen Seite und umgekehrt führt.

5. Vorrichtung gemäß irgendeinem der voranstehenden Ansprüche, **dadurch gekennzeichnet, dass** die halben Fahrgestelle (4) und (5) in dem Fall eines Vierrads jeweils ein Hinterrad (10) und (11) tragen und dass die zwei halben Fahrgestelle (4) und (5) eine gewisse Verdrehungsflexibilität aufweisen, die ihnen die Annahme eines Winkels im Verhältnis zur Kabine (1) ermöglicht, der zwischen dem Vorderteil und dem Hinterteil des betroffenen halben Fahrgestells unterschiedlich ist.

6. Vorrichtung gemäß irgendeinem der voranstehenden Ansprüche, **dadurch gekennzeichnet, dass** ein zweites mechanisches System (13), das dem System (12) ähnelt, sich jedoch am Hinterteil der Kabine befindet, in dem Fall eines Vierrads für den hinteren Teil der zwei halben Fahrgestelle (4) und (5) dieselbe Funktion erfüllt wie das System (12).

7. Vorrichtung gemäß irgendeinem der voranstehenden Ansprüche, **dadurch gekennzeichnet, dass** ein anderes mechanisches System (14), das dem System (12) ähnlich ist, jedoch einerseits mit dem Lenksystem der Vorderräder (6) und (7) verbunden ist und andererseits durch einen zentralen schwenkbaren Arm mit zentraler Achse (15) mit der Kabine (1) verbunden ist, wobei die Aufgabe des Arms (15), dessen Bestimmung in seiner Verschiebung in Abhängigkeit von dem Gleichgewicht der Kabine liegt, die Induzierung einer Quetschung oder einer Öffnung der gelenkten Räder besteht, je nachdem, ob die Kabine im Verhältnis zu ihrer Gleichgewichtsposition übermäßig oder unzureichend geneigt ist.

8. Vorrichtung gemäß irgendeinem der voranstehenden Ansprüche, **dadurch gekennzeichnet, dass** ein Lenksystem, das aus einem Lenkrad (16) und einem Steuerknüppel (17) zusammengesetzt ist, der in Rotation mit dem Steuerrad verbunden ist, dessen Schwenken in Längsrichtung jedoch frei gelassen wird, um den Vorderrädern (6) und (7) ein Quetschen oder ein Öffnen zu erlauben, zwei Pleuelstangen (18) und (19) betätigt, die zwei Übertragungswinkel (20) und (21) kippen, die wiederum selbst zwei Lenkstangen (22) und (23) betätigen, jeweils Kurbeln (24) und (25) angreifen, die fest mit Lenkangelpunkten (8) und (9) verbunden sind und zum Einschlagen der Räder (6) und (7) führen, Lenksystem, dessen allgemeine Geometrie und das Kräftegleichgewicht bewirken, dass das innere Rad stärker einschlägt als das äußere Rad.

9. Vorrichtung gemäß irgendeinem der voranstehenden Ansprüche, **dadurch gekennzeichnet, dass** die Lenkpleuelstangen (18) und (19) auf den Übertragungsstangen (20) und (21) so nahe wie möglich an der Achse gebildet sind, die durch die Angelpunkte (2) und (3) gebildet ist, damit das Schwenken der halben Fahrgestelle (4) und (5) die Einschlagsteuerung so wenig wie möglich beeinflusst.

## Claims

1. A device for purely mechanically controlling the tilt of a narrow tiltable vehicle with at least three wheels so as to ensure balance thereof regardless of its speed **characterised in that** it includes two half-chassis, a right half-chassis (4) and a left half-chassis (5) which are hinged to each other by a longitudinal axis in the form of two pivots (2) and (3).

2. The device according to claim 1, **characterised in that** the pivots (2) and (3) also bear a nacelle (1) at an axis located above the centre of gravity of said nacelle (1).

3. The device according to claims 1 and 2, **characterised in that** the half-chassis (4) and (5) bear the right (6) and left (7) steering front wheels via steering pivots (8) and (9), which pivots (8) and (9) form a low pivot angle with respect to the two half-chassis (4) and (5) such that the right and left pivot axes intersect each other at a low distance above the longitudinal axis in the form of the pivots (2) and (3).

4. The device according to claims 1 to 3, **characterised in that** a mechanical system (12) located at the front of the nacelle enables the deviation angle made by both half-chassis (4) and (5) with the nacelle (1) to be connected, the system (12) being made such that a restricted reduction in the angle between a half-chassis and the nacelle on the one side results in a high increase in the angle between the other half-chassis and the nacelle on the other side and vice-versa.

5. The device according to any of the preceding claims, **characterised in that** the half-chassis (4) and (5) each bear a rear wheel (10) and (11) in the case of a quadricycle and that both half-chassis (4) and (5) have some torsional flexibility, enabling them to assume an angle with respect to the nacelle (1) which is different between front and rear of the half-chassis concerned.

6. The device according to any of the preceding claims, **characterised in that** a second mechanical system (13) similar to the system (12) but located at the rear of the nacelle plays, in the case of a quadricycle, the same role for the rear part of both half-chassis (4) and (5) as the system (12).

7. The device according to any of the preceding claims, **characterised in that** another mechanical system (14), similar to the system (12) but connected on the one hand to the wheel steering system of the front wheels (6) and (7) and on the other hand by a central pivoting stem having a vertical axis (15) connected to the nacelle (1), which stem (15) is to be moved as a function of the nacelle balance, is used for inducing a pinch or an aperture of the steering wheels depending on whether the nacelle is excessively tilted with respect to its balance position or insufficiently tilted.

8. The device according to any of the preceding claims, **characterised in that** a steering system comprised of a fly wheel (16) and a control bar (17) rotatably connected with the fly wheel but allowed to have a longitudinal clearance to enable the front wheels (6) and (7) to be pinched or to be opened, actuates two connecting rods (18) and (19) that swing two angular members (20) and (21), actuating in turn two steering bars (22) and (23), respectively drive cranks (24) and (25), integral with the steering pivots (8) and (9) and cause the wheels (6) and (7) to be turned, which steering system has an overall geometry and force equilibriums such that the inner wheel turns more than the outer wheel.

9. The device according to any of the preceding claims, **characterised in that** the steering connecting rods (18) and (19) are hinged to the angular members (20) and (21) as close to the axis formed by the pivots (2) and (3) as possible such that the clearance of the half-chassis (4) and (5) influences at least the turning control.
